Europäisches Patentamt

European Patent Office

Office européen des brevets

(19)

(11) **EP 1 471 627 A2**

(12) **EUROPEAN PATENT APPLICATION**

(43) Date of publication:
**27.10.2004 Bulletin 2004/44**

(51) Int Cl.⁷: **H02M 3/338**

(21) Application number: **04076064.7**

(22) Date of filing: **05.04.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **15.04.2003 FI 20030569**

(71) Applicant: **Fläkt Woods AB
55184 Jönköping (SE)**

(72) Inventor: **Lyly, Matti
04430 Järvenpää (FI)**

(74) Representative:
**Järveläinen, Pertti Tauno Juhani et al
Heinänen Oy
Annankatu 31-33 C
00100 Helsinki (FI)**

(54) **Resonant power source**

(57)     A resonant power sou rce for controlling the voltage ($U_{out}$) fed into a load, said resonant source consisting of one or more resonant power source units, which comprises a resonant circuit consisting of coil and capacitor units ($L_R$, $C_R$), and switches controlling their operation, of which a first switch (SW(A)) controls the current flowing through the coil unit and a second switch (SW(B)) controls the decay of the inductive load current, which incorporates measurement of the current flowing through the coil unit and measurement of the voltage across the resonance capacitor unit, and which resonant power source unit can be controlled to function on a zero-current and zero-voltage principle so that the first switch can be switched at the zero points of the current flowing through the coil unit and the second switch can be switched at the zero points of the voltage of the capacitor unit. According to the invention, the resonant power source unit incorporates measurement of the current flowing through the second switch (SW(B)), and the second switch can also be controlled at the zero point of the current flowing through it.

**Fig. 1**

**Description**

The present invention relates to a resonant power source for the control of a voltage to be fed into a load. In particular, the invention concerns a resonant power source controlled by a zero-current and zero-voltage circuit which comprises a resonant circuit consisting of coil and capacitor units and is controlled by means of switches. The invention also relates to a three-phase resonant power source and a frequency converter in which a resonant power source according to the invention is used in the inverter section.

Resonant power sources contain a resonant circuit consisting of an inductance and a capacitance and controlled by means of semiconductor switches, such as transistors. The electric energy is alternately stored as current in the inductance of the resonant circuit and as voltage in the capacitance of the resonant circuit. The resonant power source switches the current at the zero point of either current or voltage without any losses, and thus resonant power sources have no switching losses caused by power switches. By using resonant power source techniques, it is possible to generate pulse-shaped currents and voltages which may be momentarily sinusoidal. Thus, by using a resonant power source, it is relatively easy to control e.g. the output voltage of 1- and 3-phase induction motors. From these sinusoidal current pulses (energy pulse), it is possible to form an output voltage of desired effective value at given intervals of time. A further advantage of resonant power sources is a reduced size of input and output filters as compared with e.g. a corresponding solution implemented using pulse-width modulation (PWM). In addition, using a resonant power source, the requirements imposed by the EMC regulations can be relatively easily fulfilled.

In a zero-current-switched resonant power source, the switching transitions occur at the zero point of the current, and in a zero-voltage-switched resonant power source at the zero point of the voltage. Zero-current-switched resonant power sources are disclosed e.g. in US patent specification 4,720,667, and zero-voltage-switched resonant power sources in US patent specification 4,857,822. Resonant power sources that use both zero-current and zero-voltage switching are also known. Such a resonant power source is disclosed in US patent specification 5,317, 494.

A drawback with prior-art resonant power sources is their relatively complex structure. For example, in the solution presented in US patent specification 5,317,494, a separate switching part is needed for each polarity of the input and output voltages. In addition, e.g. in the solution according to US patent specification 5,317,494, transformers are typically needed for the transmission of electric power.

The object of the present invention is to create a new type of resonant power source controlled by zero-current and zero-voltage switching. The resonant power source of the invention is based on a new type of timing of the power switches of the resonant power source.

Another object of the invention is to create a new type of resonant power source for alternating-current operation e.g. for controlling the amplitude of the input voltage of 1- and 3-phase fan motors.

A further object of the invention is to create a new type of frequency converter e.g. for controlling the frequency of the input voltage of 3-phase fan motors.

The features characteristic of the apparatus of the invention are presented in detail in the claims below.

The invention makes it possible to achieve a very simple resonant power source structure. In the solution of the invention, no transformers are needed for the transmission of electric power. By utilizing the invention, a switch structure smaller than in prior-art PWM technology can be achieved, and it also reduces the need for cooling.

In the following, the invention will be described in detail with reference to an example and the attached drawings, wherein

Fig. 1 represents an L-type resonant power source according to the invention,
Figures 2a - 2c illustrate the control of the switches of the resonant power source of the invention and the generation of output current and output voltage,
Figures 3a - 3d illustrate the operation of the resonant circuit of the resonant power source of the invention in the case of positive input voltage,
Figures 4a - 4d illustrate the operation of the resonant circuit of the resonant power source of the invention in the case of negative input voltage,

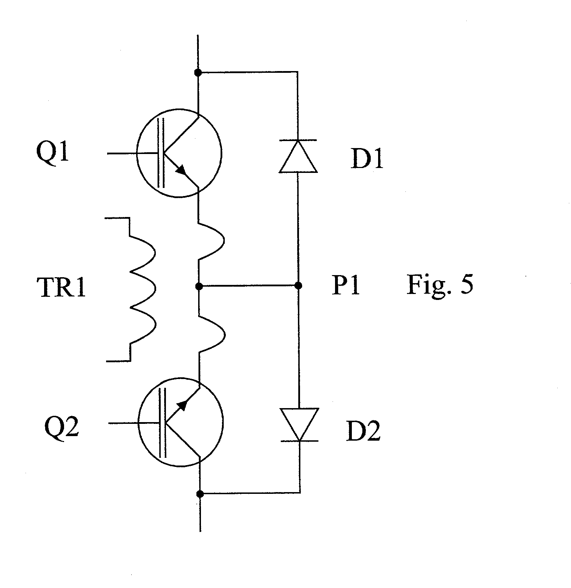

Fig. 5 illustrates the structure of the switch,
Fig. 6 represents a three-phase resonant power source according to the invention, and
Fig. 7 represents a frequency converter in which a resonant power source according to the invention is used in the inverter section.

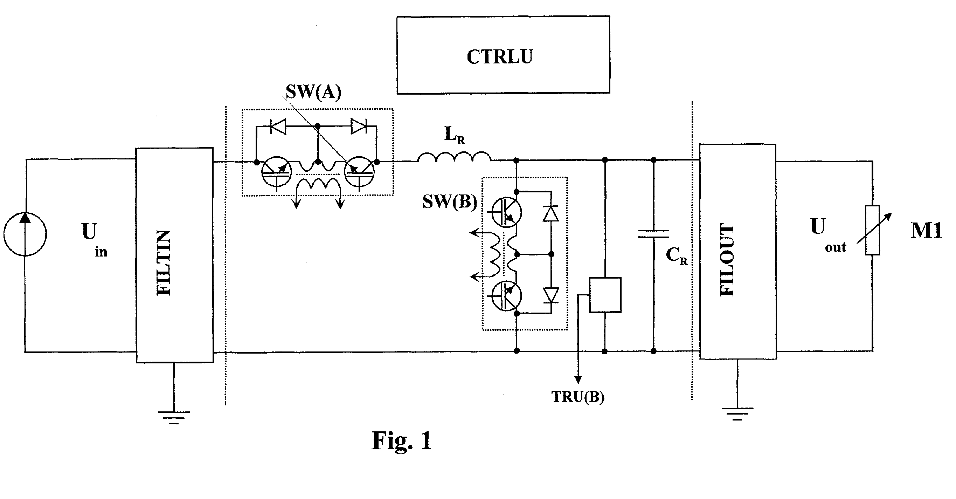

Fig. 1 represents a resonant power source according to the invention, which works on the zero-current and zero-voltage principle and which can be used to control e.g. the amplitude of an alternating voltage $U_{out}$. The wave shape of the alternating voltage $U_{in}$ connected to the input of the power source is transmitted to the output $U_{out}$ of the power source, and its polarity remains the same. The output voltage $U_{out}$ of the power source serves as an input voltage to a load M1, which may be e.g. a 1-phase cage induction motor of a fan.

The operation of the resonant power source of the invention is based on modulating the total cycle time T, whereby the output voltage amplitude changes according to the ratio of the input voltage $U_{in}$, current pulse duration $T_A$ and total cycle time T, depending on the root mean square value of the output current:

$$I_{RMS} = I_{PEAK} \left[ \frac{T_A}{2T} \right]^2 \qquad (1)$$

where $I_{RMS}$ is the root mean square value of the output current and $I_{PEAK}$ is the peak value of the current pulse.

The resonant power source presented in Fig. 1 is comprised of a resonant circuit consisting of a coil $L_R$ and a capacitor $C_R$, and a series switch SW(A) connected in series with the coil and a parallel switch SW(B) connected in parallel with the capacitor $C_R$. In addition, the power source comprises an input filter FILTIN and an output filter FILTOUT, and both switches are provided with a current measuring converter as well as a voltage transducer TRU(B) across capacitor $C_R$ for measuring the voltage. The switches of the power source are controlled by a control unit CTLRU, which also receives the current and voltage measurement data from the current and voltage measuring units.

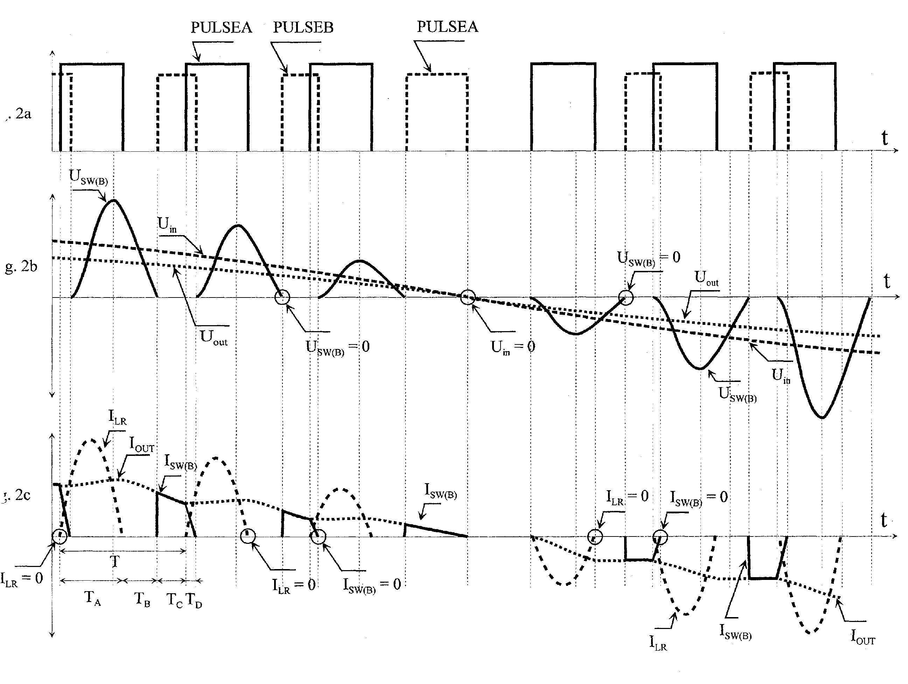

Figures 2a -2c illustrate the control of the switches of the alternating-current resonant power source of the invention and the formation of the output current and voltage on a time axis t. Fig. 2a presents successive rectangular pulses PULSEA and PULSEB controlling the switches SW(A) and SW(B). The control pulses PULSEA and PULSEB may partly overlap each other. The duration of a cycle is T, and it consists of time intervals $T_A$ (conduction time of switch SW(A)), $T_B$ (both switches off) and $T_C$ (switch SW(B) conducting).

Fig. 2b shows voltage curves representing the voltage $U_{SW(B)}$ of switch SW(B), the alternating input voltage $U_{in}$ and the output voltage $U_{out}$. Voltage $U_{SW(B)}$ consists of positive and negative resonance pulses, and the input and output voltages $U_{in}$ and $U_{out}$ vary sinusoidally on either side of the zero point $U_{in} = 0$. The wave shape of the resonance capacitor voltage $U_{SW(B)}$ is not purely sinusoidal, except on its leading edge. The shape of its trailing edge depends on the load. When the controller is lightly loaded, the rate of change of the voltage of its resonance capacitor is lower than when the controller is heavily loaded.

Fig. 2c presents current curves representing the current $I_{LR}$ of switch SW(A), the current $I_{SW(B)}$ of switch SW (B) and the output current $I_{OUT}$. Current $I_{LR}$ consists of positive and negative sinusoidal resonance pulses (duration $T_A$), and the current $I_{SW(B)}$ of switch SW(B) consists of pulses whose duration is $T_C$ plus the time $T_D$ during which a current continues to flow through the switch while a new current pulse $I_{LR}$ is already flowing through switch SW(A). These current pulses have an approximately rectangular shape. All these currents are determined by Kirchhoffs law

$$I_{LR} + I_{SW(B)} = I_{OUT} + I_{CR} \qquad (2),$$

which also determines their shape. They have a perpendicular leading edge, a slightly falling upper edge, and a trailing edge falling (upwards) to zero (rising) during time $T_D$. The output current $I_{OUT}$ is a continuous sinusoidally varying curve which follows the shape of the pulses $I_{SW(B)}$, and near the zero point a current flows only through switch SW(B) on the positive side and through switch SW(A) during negative polarity.

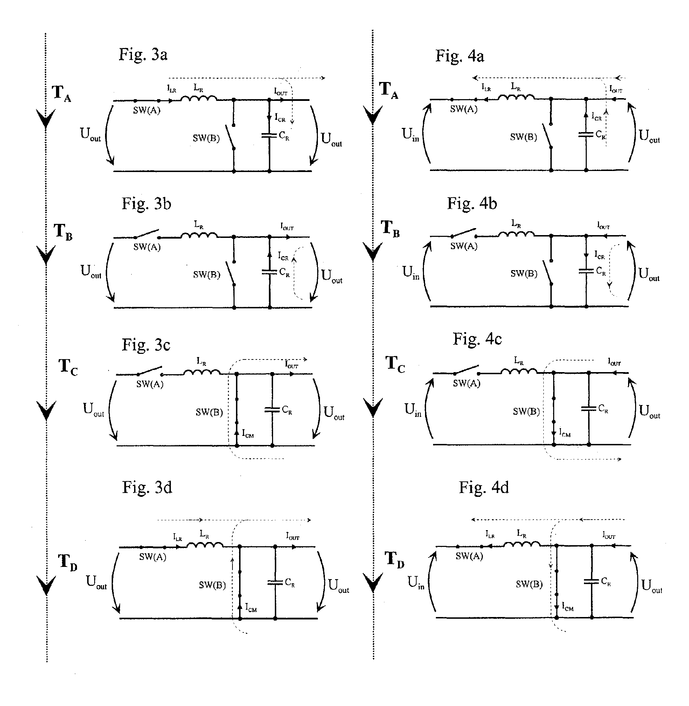

With positive input voltage $U_{in}$, the circuit works according to figures 3a - 3d as follows: During time interval $T_A$ the input current $I_{LR}$ begins to flow towards the load, charging the capacitor $C_R$. During time interval $T_B$ the capacitor $C_R$ is discharged into the output, and during time interval $T_C$ the output current continues flowing through switch SW (B). During time interval $T_D$ the current $I_R$ of the coil $L_R$ increases and the current $I_{CM}$ of switch SW(B) falls to zero.

With negative input voltage $U_{in}$, the circuit works according to figures 4a - 4d as follows: During time interval $T_A$ the input current $I_{LR}$ begins to flow towards the supply network, charging the capacitor $C_R$. During time interval $T_B$ the capacitor $C_R$ is discharged into the output, and during time interval $T_C$ the output current continues flowing through switch SW(B). During time interval $T_D$ the current $I_R$ of the coil $L_R$ increases and the current $I_{SDW(B)}$ of switch SW(B) falls to zero.

The switches SW(A) and SW(B) are two-way switches with integrated current measurement. They consist of two transistors Q1 and Q2 conducting in opposite directions and diodes D1 and D2 connected in inverse-parallel with them. Connected between the transistors and the diodes is a current transformer TR1. The current transformer TR1 is connected to a connecting point P1 between the transistors so that, regardless of the direction of the current flowing through the switch, the current can always flow through the current transformer, either via route Q1 - D2 or via route D1 - Q2. In this way, the current measurement can be performed in a very simple manner regardless of the polarity of the voltage. Thus, switch SW(B) can be driven into the conducting state when in the resonance sequence the voltage across it has fallen to 0. Switch SW(B) can be driven into the non-conducting state when in the resonance sequence its current has fallen to 0.

The power source may also be an M-type device, in which case the resonance capacitor $C_R$ is connected in series with the coil and switch SW(A) while switch SW(B) is connected to the output terminals as in Fig. 1.

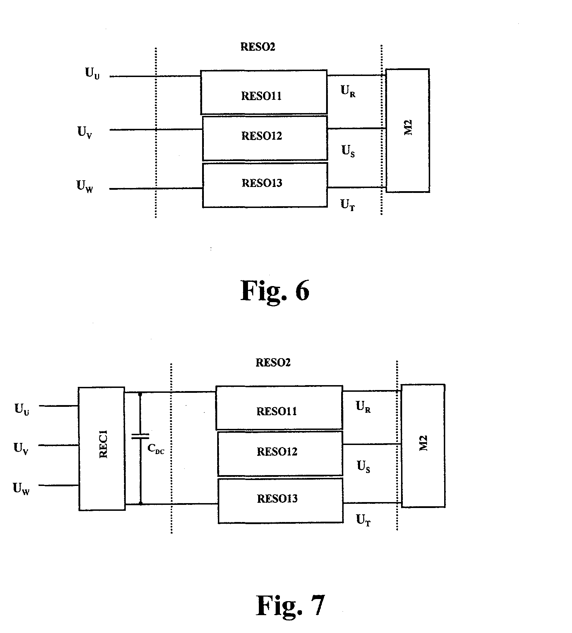

The input voltage may also be a DC voltage, in which case the output voltage is also a DC voltage and the power source functions as a DC voltage regulator. The resonant power source of the invention may also be a three-phase resonant power source RESO1, which has three resonant circuits RESO11 - RESO13 according to Fig.1 and which is used to control the amplitude of the voltage $U_U$, $U_V$, $U_W$ fed into a three-phase motor M2 from a three-phase network (phase voltages $U_R$, $U_S$, $U_T$) (Fig. 6).

The resonant power source of the invention can also be used in a three-phase frequency converter, by means of which it is also possible to control the frequency of the output voltage, i.e. the frequency of the input voltage fed into the load M2. In this case, a three-phase resonant power source having three single-phase resonant circuits functions as an inverter RESO2 in a frequency converter comprising a rectifier REC1 and a DC-voltage intermediate circuit with a DC voltage capacitor $C_{DC}$. It can be used to control the frequency of the voltage $U_U$, Uv, $U_W$ supplied from a three-phase network (phase voltages $U_R$, $U_S$, $U_T$) (Fig. 7) into a three-phase motor M2.

It is obvious to the person skilled in the art that different embodiments of the invention are not limited to the example described above, but that they may be varied within the scope of the claims presented below.

## Claims

1.  A resonant power source for controlling a voltage ($U_{out}$) to be fed into a load, said resonant source consisting of one or more resonant power source units (RESO11 - RESO13),
    which comprises a resonant circuit consisting of coil and capacitor units ($L_R$, $C_R$), and switches controlling their operation, of which a first switch (SW(A)) controls the current flowing through the coil unit and a second switch (SW(B)) controls the decay of the inductive load current,
    which comprises measurement of the current flowing through the coil unit and measurement of the voltage across the resonance capacitor unit, and
    which resonant power source unit can be controlled to function on a zero-current and zero-voltage principle so that the first switch can be switched at the zero points of the current flowing through the coil unit and the second switch can be switched at the zero points of the voltage of the capacitor unit,
    **characterized in that**
    the resonant power source unit incorporates measurement of the current flowing through the second switch (SW(B)), and
    the second switch can also be controlled at the zero point of the current flowing through it.

2.  A resonant power source according to claim 1, **characterized in that** the resonant power source incorporates modulation of the total cycle time (T), with the amplitude of the output voltage changing in relation to the input voltage ($U_{in}$), the current pulse duration ($T_A$) and the total cycle time (T).

3.  A resonant power source according to claim 1, **characterized in that** the second switch can be driven into the conducting state by the voltage across it even at the same time ($T_D$) with the conduction time ($T_A$) of the first switch.

4.  A resonant power source according to claim 1, **characterized in that** the semiconductor switch is integrated with a current measuring transformer to form a combined switching and current measuring unit.

5.  A resonant power source according to claim 4, **characterized in that** the unit consists of two semiconductor switches (Q1 and Q2) conducting in opposite directions and diodes (D1 and D2) connected in inverse-parallel with them, with a current transformer (TR1) connected between said semiconductor switches, said current transformer being connected to the connecting point between the transistors so that, regardless of the direction of the current flowing through the switch, the current can always flow through the current transformer.

6.  A resonant power source according to claim 1, **characterized in that** the resonant power source is an alternating-voltage power source, which can be connected to an alternating-voltage supply and by means of which the voltage of the alternating-voltage supply can be controlled.

7.  A resonant power source according to claim 1, **characterized in that** the resonant power source is a DC-voltage power source, which can be connected to a DC voltage supply and by means of which the voltage of the DC voltage supply can be controlled.

8. A resonant power source according to claim 1, **characterized in that** it consists of three resonant power source units for the control of a three-phase alternating voltage.

9. A frequency converter for controlling the frequency and amplitude of a voltage ($U_{out}$) to be fed into a load, comprising a rectifier, a DC intermediate circuit provided with a capacitor, and an inverter,

**characterized in that**

the inverter is a resonant source consisting of one or more resonant power source units (RESO11 - RESO13),

which comprises a resonant circuit consisting of coil and capacitor units ($L_R$, $C_R$) and switches controlling their operation, of which a first switch (SW(A)) controls the current flowing through the coil unit and a second switch (SW(B)) controls the decay of an inductive load current,

which incorporates measurement of the current flowing through the coil unit and measurement of the voltage across the resonance capacitor unit,

which resonant power source unit can be controlled to function on a zero-current and zero-voltage principle so that the first switch can be switched at the zero points of the current flowing through the coil unit and the second switch can be switched at the zero points of the voltage of the capacitor unit,

wherein the resonant power source unit incorporates measurement of the current flowing through the second switch (SW(B)), and

the second switch can also be controlled at the zero point of the current flowing through it.

Fig. 1

Fig. 2a
Fig. 2b
Fig. 2c

Fig. 3a

$T_A$

Fig. 4a

$T_A$

Fig. 3b

$T_B$

Fig. 4b

$T_B$

Fig. 3c

$T_C$

Fig. 4c

$T_C$

Fig. 3d

$T_D$

Fig. 4d

$T_D$

Fig. 5

D1

P1

D2

Q1

TR1

Q2

Fig. 6

Fig. 7